(19) **Europäisches Patentamt**
**European Patent Office**
**Office européen des brevets**

(11) **EP 4 465 140 A1**

(12) **EUROPÄISCHE PATENTANMELDUNG**

(43) Veröffentlichungstag:
**20.11.2024 Patentblatt 2024/47**

(21) Anmeldenummer: **24174867.2**

(22) Anmeldetag: **08.05.2024**

(51) Internationale Patentklassifikation (IPC):
**G05B 19/418** (2006.01)   **G05B 17/02** (2006.01)

(52) Gemeinsame Patentklassifikation (CPC):
**G05B 19/41885; G05B 17/02**

(84) Benannte Vertragsstaaten:
**AL AT BE BG CH CY CZ DE DK EE ES FI FR GB GR HR HU IE IS IT LI LT LU LV MC ME MK MT NL NO PL PT RO RS SE SI SK SM TR**
Benannte Erstreckungsstaaten:
**BA**
Benannte Validierungsstaaten:
**GE KH MA MD TN**

(30) Priorität: **10.05.2023 DE 102023204299**

(71) Anmelder: **Robert Bosch GmbH**
**70442 Stuttgart (DE)**

(72) Erfinder: **Giani, Marco**
**70197 Stuttgart (DE)**

(54) **COMPUTERIMPLEMENTIERTES VERFAHREN ZUR ANPASSUNG EINER GERÄTEZUSAMMENSTELLUNG**

(57)     Die Erfindung betrifft Computerimplementiertes Verfahren zur Anpassung einer Gerätezusammenstellung aus physischen und virtuellen Geräten bezüglich der Ausfallzeit, wobei das Verfahren umfasst: Bilden von n Konfigurationen aus x Geräten, wobei mit den Geräten einer jeden Konfiguration (8) alle x Funktionen der Funktionsliste (12) ausführbar sind; Durchführen einer Laufzeitsimulation und Ermitteln einer Ausfallzeit (2, (4) für jedes der physischen Geräte des Parametersatzes; Ermitteln einer Ausfallzeit (3) für jedes der virtuellen Geräte des Parametersatzes unter Verwendung der dem jeweiligen virtuellen Gerät zugeordneten virtuellen Ausfallwahrscheinlichkeit; Ermitteln einer Gesamtausfallzeit (6) für jede der n Konfigurationen (8) unter Verwendung der Ausfallzeiten (2, 3, 4) für jedes der physischen und virtuellen Geräte der jeweiligen Konfiguration (8); und Anpassen der Gerätezusammenstellung entsprechend der Konfiguration (8) mit der geringsten Gesamtausfallzeit (10).

Fig. 1

**EP 4 465 140 A1**

**Beschreibung**

Die Erfindung betrifft das Gebiet der System-Automatisierung und -Digitalisierung und im Besonderen das Set-up von Prozessen mit einer Edge-Computing-Steuerung.

Zunehmend werden Fertigungsprozesse automatisiert und digitalisiert. Moderne Hardware macht es möglich, dass die Steuerung von Fertigungsmaschinen und Produktionsanlagen nicht vor Ort an den Maschinen in physischen Geräten erfolgen muss. Stattdessen können die Funktionen dank hinreichender Konnektivität zentral von einem Server aus gesteuert werden.

Steht der Server jedoch zu weit von den Anlagen entfernt, können Latenzen entstehen, die die Effizienz der Prozesse senken. Das ist insbesondere dann der Fall, wenn die Steuerung nicht nur Befehle ausgibt, sondern auch Parameter von der Anlage empfängt. Diese Parameter können beispielsweise Systemparameter wie Prozessgeschwindigkeit, Arbeitszustände der jeweiligen Maschinen oder auch Messwerte von Sensoren sein.

Das Edge-Cloud-Control-Konzept (ECC) wurde entwickelt, um die Probleme traditioneller Automatisierungssysteme zu lösen, indem die Anzahl der Hardware-basierten Steuergeräte wie speicherprogrammierbare Steuerungen (SPS) und Industrie-PCs (IPCS), die vor Ort eingesetzt werden, reduziert und so der Wartungs- und Betriebsaufwand für industrielle Automatisierungssysteme vereinfacht wird. Beim ECC-Konzept werden die für den Betrieb einer Produktionslinie erforderlichen Automatisierungssoftwareanwendungen in einer Serverinfrastruktur (der sogenannten Edge Cloud) ausgeführt. Die Edge Cloud wird direkt auf dem Werksgelände gehostet und kann aufgrund ihrer Nähe zu den Feldsensoren und -aktoren sehr niedrige Antwortlatenzen und ein deterministisches Verhalten garantieren.

In der Praxis ist der Realisierungsaufwand einer ECC-Infrastruktur proportional zu den Anforderungen der in der Edge Cloud gehosteten Anwendungen. Eine automatisierte Prozessstation besteht nämlich aus verschiedenen Softwarekomponenten, die auf unterschiedlichen Geräten ausgeführt werden und unterschiedliche Anforderungen an die Echtzeitausführung stellen. So wird beispielsweise das Steuerungsprogramm der Station auf SPS ausgeführt und erfordert eine feste bis harte Echtzeitausführung mit Zyklen von 1 bis 10 ms (je nach Anwendung), während die Software für die Mensch-Maschine-Schnittstelle (HMI) unter fast keinen Echtzeitanforderungen auf separaten industriellen IPCs ausgeführt wird.

Die Migration der gesamten Automatisierungssoftware einer automatisierten Prozessstation kann zwar einerseits den Aufwand für deren Wartung und Betrieb auf ein Minimum reduzieren, andererseits aber auch einen hohen Implementierungsaufwand verursachen, da sehr strenge Echtzeitanforderungen an die Serverinfrastruktur gestellt werden. Diese erfordert den Einsatz spezieller Netzwerk- und Virtualisierungskomponenten und deren Konfigurationen.

Es ist daher zwischen dem hohen Wartungsaufwand von physischen Geräten und dem hohen Installationsaufwand von virtuellen, serverseitigen Geräten abzuwägen.

Die Wahl der optimalen Konfiguration für eine automatisierte Edge Cloud-Prozessstation kann daher komplex werden, insbesondere wenn nicht nur eine einzelne Station, sondern beispielsweise eine ganze Produktionslinie entworfen werden muss.

Der Erfindung liegt somit die Aufgabe zugrunde, eine bezüglich der Ausfallzeit optimierte Gerätezusammenstellung für zu digitalisierende und automatisierende Prozesse bereitzustellen.

Die Aufgabe wird gelöst durch die Gegenstände der unabhängigen Ansprüche.

Offenbarung der Erfindung

Gemäß einem ersten Aspekt der Erfindung wird diese Aufgabe gelöst durch ein computerimplementiertes Verfahren zur Anpassung einer Gerätezusammenstellung aus physischen und virtuellen Geräten bezüglich der Ausfallzeit, wobei das Verfahren umfasst:

- Erfassen einer Funktionsliste mit x Funktionen sowie eines Parametersatzes für die physischen und virtuellen Geräte, mit denen die x Funktionen ausführbar sind,
  wobei der Parametersatz für jedes virtuelle Gerät eine virtuelle Ausfallwahrscheinlichkeit umfasst;
- Bilden von n Konfigurationen aus x Geräten,
  wobei mit den Geräten einer jeden Konfiguration alle x Funktionen der Funktionsliste ausführbar sind;
- Durchführen einer Laufzeitsimulation und Ermitteln einer Ausfallzeit für jedes der physischen Geräte des Parametersatzes;
- Ermitteln einer Ausfallzeit für jedes der virtuellen Geräte des Parametersatzes unter Verwendung der dem jeweiligen virtuellen Gerät zugeordneten virtuellen Ausfallwahrscheinlichkeit;
- Ermitteln einer Gesamtausfallzeit für jede der n Konfigurationen unter Verwendung der Ausfallzeiten für jedes der physischen und virtuellen Geräte der jeweiligen Konfiguration; und
- Anpassen der Gerätezusammenstellung entsprechend der Konfiguration mit der geringsten Gesamtausfallzeit.

Physische Geräte sind im Rahmen dieser Erfindung Geräte, die an der Produktionslinie verbaut und betrieben werden. Als physische Geräte können beispielsweise, ohne hierauf beschränkt zu sein, speicherprogrammierbare Steuerungen, Mikrocontroller oder Industrie-PCs verwendet werden.

Virtuelle Geräte auf der anderen Seite sind Software, die Geräte virtuell abbildet. Das heißt, die Funktion, die die physischen Gegenstücke ausführen würden, werden von einer Software ausgeführt, die wiederum auf einem Server ausgeführt wird. Dabei kann der Server, je nach Konfiguration, dazu ausgebildet sein, mehrere oder hier nicht genannte Funktionen auszuführen.

Eine Gerätezusammenstellung ist eine Auswahl aus physischen und virtuellen Geräten, die zusammen einen Prozess steuern. Ein Prozess kann in diesem Sinne beispielsweise eine vollständige Produktionslinie oder einen Teil davon betreffen. Auch Prozesse wie beispielsweise Qualitätskontrollen können hierunter fallen.

Um einen Prozess auszuführen, müssen mehrere Funktionen erfüllt werden. Zur Erfüllung der erfindungsgemäßen Aufgabe ist es daher notwendig, dass eine Funktionsliste definiert ist. Die Funktionsliste umfasst alle Funktionen der anzupassenden Gerätezusammenstellung, die durch physische oder virtuelle Geräte ausgeführt werden sollen. Die Funktionsliste definiert damit indirekt, welche physischen und virtuellen Geräte überhaupt verwendet werden können. Denn für die Erfüllung einer Aufgabe können durchaus mehrere Geräte zur Verfügung stehen.

In einer Ausführungsform sind den einzelnen Funktionen der Funktionsliste potenziell verwendbare physische und virtuelle Geräte, beispielsweise durch eine Geräte-ID, zugeordnet. Das Erfassen des Parametersatzes kann in dieser Ausführungsform das Auslesen der potenziell verwendbaren Geräte aus der Funktionsliste umfassen.

In einer weiteren Ausführungsform kann der Parametersatz aus einem Speicher automatisiert und entsprechend den potenziell verwendbaren Geräten ausgelesen werden. Zum Starten des Verfahrens gemäß dieser Ausführungsform müssen dann lediglich die Funktionen definiert werden, die mit der Gerätezusammenstellung ausgeführt werden sollen.

Das Erfassen der Funktionsliste und des Parametersatzes kann über eine Mensch-Maschine-Schnittstelle, beispielsweise eine Eingabemaske erfolgen. In einer Ausführungsform sind die Parameter für die zur Verfügung stehenden Geräte in einer Datenbank hinterlegt, die beim Erfassen des Parametersatzes ausgelesen wird.

Alternativ können die Funktionsliste und der Parametersatz auch automatisiert aus einem vom erfindungsgemäßen Verfahren entkoppelten Prozess zur Verfügung gestellt werden. Beispielsweise kann ein Verfahren zur Optimierung einer Produktionslinie unter Verwendung einer künstlichen Intelligenz eine Funktionsliste erstellen, die im erfindungsgemäßen Verfahren weiter verarbeitet wird, um die geeignete Gerätezusammenstellung für die Funktionsliste zu finden.

Die physischen und virtuellen Geräte einer Gerätezusammenstellung können derart untereinander kommunikativ verbunden sein, sodass der Ausfall eines Geräts den Stopp des gesamten Prozesses zur Folge haben kann. Fällt beispielsweise ein Gerät aus, das die Sensordaten eines Sensors verarbeitet, können die nachgeschalteten Funktionen, die den Sensorwert als Eingangsparameter verwenden, nicht ausgeführt werden. Die Ausfallzeit der einzelnen Geräte beeinflusst daher die Ausfallzeit für den gesamten Prozess, welche auf ein Minimum zu beschränken ist.

Die Funktionsliste umfasst x Funktionen, wobei x eine natürliche Zahl größer oder gleich zwei ist. Eine Funktionsliste mit nur einer Funktion würde zu einer trivialen Entscheidung führen, bei der es keine Abhängigkeiten der Geräte untereinander geben kann. Je mehr Geräte für die Abbildung eines Prozesses benötigt werden, desto schwieriger gestaltet sich die Vorhersage einer Gesamtausfallzeit für den Prozess. Grundsätzlich gilt, dass je mehr Funktionen von der Funktionsliste umfasst sind, desto mehr Geräte werden für einen Prozess benötigt und desto sinnvoller ist die Verwendung des hier vorgestellten Verfahrens.

Die Ausfallwahrscheinlichkeiten von physischen Geräten können vom jeweiligen Hersteller angegeben sein. Alternativ kann die Ausfallwahrscheinlichkeit empirisch über ein Verhältnis aus Ausfallzeit zu Betriebsdauer ermittelt worden sein. Die Ausfallwahrscheinlichkeit muss dabei nicht unbedingt eine reelle Zahl sein. Sie kann vielmehr auch eine zeitabhängige Funktion sein, mit der widergespiegelt wird, dass die Ausfallwahrscheinlichkeit mit der Betriebsdauer zunimmt. Damit kann beispielsweise Verschleiß oder Beschädigung durch den Betrieb, insbesondere Überhitzen, berücksichtigt werden.

Virtuelle Geräte haben keine Ausfallwahrscheinlichkeit im Sinne von physischen Geräten. Ihre Funktionen werden von einem Server ausgeführt, der über Redundanzen verfügen kann, sodass ein ausgefallener Kernel durch einen anderen ersetzt werden kann. Dennoch kann der Betrieb eines Servers gestört sein, wenn beispielsweise die darin verbaute Hardware ausfällt. Da das virtuelle Gerät dann nicht ausgeführt wird, das wiederum die entsprechende Funktion ausführen soll, wäre der Prozess in seiner Gesamtheit gestört. Daher kann für jedes virtuelle Gerät eine Ausfallwahrscheinlichkeit angenommen werden, die der Ausfallwahrscheinlichkeit der Edge Cloud entspricht. Werden die virtuellen Geräte von unterschiedlichen Servern ausgeführt, können sich die Ausfallwahrscheinlichkeiten der virtuellen Geräte voneinander unterscheiden.

Im Rahmen dieser Erfindung ist jede Ausfallwahrscheinlichkeit in eine Ausfallzeit umrechenbar und umgekehrt. Die Ausfallwahrscheinlichkeit ist definiert als das Verhältnis der Ausfallzeit zur (angestrebten) Betriebsdauer. Eine Ausfallwahrscheinlichkeit von 0,01 % entspräche beispielsweise bei einer Betriebsdauer von einem Jahr bzw. 365 Tagen einer Ausfallzeit von 0,0365 Tagen.

Im Rahmen dieser Erfindung wird ferner der Begriff einer Konfiguration verwendet. Der Begriff 'Konfiguration' beschreibt eine Möglichkeit für eine Gerätezusammenstellung aus physischen und/oder virtuellen Geräten. Die Gerätezusammenstellung ist dem gegenüber eine Konfiguration, die letztlich im Prozess verwendet wird. Mit anderen Worten, die Konfiguration ist eine Gerätezusammenstellung in der Planungsphase und die Gerätezusammenstellung entspricht einer für den Prozess verwirklichten Konfiguration.

Die Konfigurationen werden so gebildet, dass sie sich voneinander unterscheiden. Jede Konfiguration ist dabei eine Möglichkeit, wie virtuelle und physische Geräte miteinander kombiniert werden können, um alle Funktionen der Funktionsliste auszuführen. Konfigurationen, in denen nicht alle Funktionen ausführbar sind, werden nicht beachtet. Die Konfiguration, in der alle Geräte physische Geräte sind, entspricht einer 'klassischen' Konfiguration, in der kein Gerät als virtuelles Gerät in der Edge Cloud ausgeführt wird. Die Konfiguration, die ausschließlich aus virtuellen Geräten besteht, ist das andere Extrem. Hier werden keine physischen Geräte eingesetzt. Das bedeutet, alle Geräte werden als virtuelle Geräte in der Edge Cloud ausgeführt. Je nach Anzahl der auszuführenden Funktionen können beliebig viele Kombinationen aus virtuellen und physischen Geräten zwischen diesen beiden Extrema gebildet werden.

In einer Ausführungsform führt jedes Gerät genau eine Funktion aus, sodass die Anzahl der Funktionen x mit der Anzahl der Geräte übereinstimmt. In vorteilhafter Weise wird dadurch verhindert, dass ein Gerät fälschlicherweise die falsche Funktion ausführt und der Prozess dadurch gestört wird. Das bedeutet, die Bijektivität der Funktionen und Geräte verringert die Fehlerquote im Prozess und verbessert seine Effizienz.

Für jedes physische Gerät wird eine Ausfallzeit anhand einer Laufzeitsimulation ermittelt. Die Laufzeitsimulation simuliert den Betrieb des physischen Geräts für eine bestimmte Betriebsdauer. Die in der Simulation ermittelten Ausfallzeiten werden am Ende einer jeden Simulation aufaddiert und gemittelt.

Die Schritte b), c) und d) können in beliebiger Reihenfolge durchgeführt werden, da sie nicht aufeinander aufbauen. Beispielsweise kann Schritt d) direkt nach Schritt a) durchgeführt werden, gefolgt von Schritt c) und Schritt b).

Erst bei Schritt e) muss die Reihenfolge der Schritte wieder beachtet werden, da Schritt e) die Ergebnisse der Schritte b) bis d) voraussetzt. In Schritt e) werden die Gesamtausfallzeiten für jede der in Schritt b) gebildeten Konfigurationen ermittelt. Dazu werden die Ausfallzeiten für jedes der Geräte einer jeden Konfiguration aufaddiert. Die Konfiguration mit der geringsten Ausfallzeit wird ausgewählt.

Die Gerätezusammenstellung erfolgt in Schritt f) entsprechend der ausgewählten Konfiguration mit der geringsten Ausfallzeit. Dadurch wird der Prozess so gestaltet, dass er möglichst effizient betrieben werden kann.

Das Anpassen der Gerätezusammenstellung kann beispielsweise automatisch oder manuell erfolgen. Eine automatische Anpassung umfasst das Zu- und Abschalten von physischen Geräten im Prozess und die Einrichtung von virtuellen Geräten für jede Funktion, die nicht von einem physischen Gerät ausgeführt wird. Beim manuellen Anpassen wird einem Nutzer die Konfiguration mit der geringsten Ausfallzeit ausgegeben, sodass die physischen Geräte entsprechend geschaltet und die nötigen virtuellen Geräte in der Edge Cloud installiert werden können.

In einer Ausführungsform werden einem Nutzer die Gesamtausfallzeiten mehrerer Konfigurationen präsentiert, um die Anpassung der Gerätezusammenstellung transparent zu gestalten. In vorteilhafter Weise kann ein Nutzer so nachvollziehen, wie die Anpassung der Gerätezusammenstellung zustande gekommen ist.

Die Erfindung löst die Aufgabe dadurch, dass mit dem vorgeschlagenen Verfahren die zur Verfügung stehenden Geräte zu verschiedenen Konfigurationen zusammengestellt und die sich für die Konfigurationen erwarteten Ausfallzeiten verglichen werden, wodurch die Konfiguration mit der geringsten erwarteten Ausfallzeit ermittelt werden kann.

In einer Ausführungsform umfasst die Laufzeitsimulation die folgenden Schritte:

- Prüfen, ob das Gerät in einem Betriebszustand ist,
- Ermitteln eines Zufallswerts r, der bestimmt, ob das Gerät von dem Betriebszustand in einen Ausfallzustand wechselt,
- Erhöhen der Ausfallzeit, wenn das Gerät in einen Ausfallzustand übergegangen ist,
- Versetzen des Geräts in den Betriebszustand nach einer bestimmten Ausfallzeit, wenn das Gerät nicht im Betriebszustand ist.

Der Betriebszustand repräsentiert den Zustand, eines physischen Geräts, in dem es die Funktion ausführt, für die es vorgesehen ist. Der Ausfallzustand hingegen repräsentiert einen Zustand, in dem das Gerät die Funktion nicht ausführen kann.

Der Zufallswert kann beispielsweise als Pseudozufallszahl mathematisch bestimmt werden.

In einer Ausführungsform sind die Zufallszahl und die Ausfallwahrscheinlichkeit reelle Zahlen zwischen 0 und 1. Der Übergang vom Betriebszustand in den Ausfallzustand kann dann durch einen einfachen Vergleich der Zufallszahl mit der Ausfallwahrscheinlichkeit ermittelt werden. Der Übergang vom Ausfallzustand in den Betriebszustand erfolgt automatisch nach Ablauf einer gewissen Zeit.

In einer Ausführungsform ist die Laufzeitsimulation eine Monte-Carlo-Simulation.

Eine zufallsbasierte Laufzeitsimulation bewirkt in vorteilhafter Weise, dass komplexe und nur schwer oder gar nicht analytisch bestimmbare technische Zusammenhänge analysiert werden können, wobei die Ergebnisse der Simulation zur Anpassung der Gerätezusammenstellung verwendet werden.

In einer Ausführungsform umfasst das Ermitteln der Gesamtausfallzeit die folgenden Schritte:

a. Durchführen von n-1 Vergleichen von jeweils zwei Konfigurationen, wobei eine der beiden zu vergleichenden Konfigurationen eine erste Konfiguration mit ausschließlich physischen Geräten ist und die andere der zu vergleichenden Konfigurationen eine der anderen n-1 Konfigurationen ist;

b. Streichen von Geräten aus den zu vergleichenden Konfigurationen für die Funktionen, für die das Gerät der anderen der n-1 Konfigurationen ein physisches Gerät ist; und

c. Ermitteln von relativen Ausfallzeiten für jeden Vergleich durch Aufsummieren der Ausfallzeiten aller Geräte einer Konfiguration, die nicht gestrichen wurden und bilden der Differenz zwischen der ersten Konfiguration und der anderen Konfiguration des jeweiligen Vergleichs, wobei die relative Ausfallzeit die Differenz zwischen den Gesamtausfallzeiten der verglichenen Konfigurationen ist.

Die erste Konfiguration ist eine Benchmark-Konfiguration, die einer bekannten oder bereits verwendeten Gerätekonfiguration entsprechen kann. Sie kann beispielsweise eine Konfiguration sein, die allein aus physischen Geräten gebildet ist.

Aus den miteinander verglichenen Konfigurationen werden die herausgefiltert, deren relative Ausfallzeit positiv ist. Durch den unmittelbaren Vergleich der Konfigurationen mit der Benchmark-Konfiguration reduziert sich die Anzahl der zur Auswahl stehenden Konfigurationen. Ferner wird der Vergleich einfacher und resistenter gegenüber Rundungsfehlern beim Vergleich, da durch Rundungen keine Vorzeichenfehler entstehen können.

Aus den Konfigurationen, die gegenüber der Benchmark-Konfiguration eine positive relative Ausfallzeit aufweisen, wird diejenige ausgewählt, die die kleinste relative Ausfallzeit ergeben hat. Ist keine relative Ausfallzeit positiv, ist die Benchmark-Konfiguration die Konfiguration mit der geringsten Ausfallzeit.

In einer Ausführungsform umfasst der Parametersatz für jedes physische Gerät einen Wert für eine erste Ausfallwahrscheinlichkeit $p_1$, eine erste Ausfallzeit $t_{r1}$ und eine zweite Ausfallzeit $t_{r2}$. Die Laufzeitsimulation simuliert einen oder mehrere zufällige Zeitpunkte $t_i$ eines Zustandswechsels von einem Betriebszustand in einen von zwei Ausfallzuständen. Die Wahrscheinlichkeit für einen Übergang vom Betriebszustand in einen ersten der zwei Ausfallzuständen ist $p_1$ und die Wahrscheinlichkeit für einen Übergang vom Betriebszustand in den zweiten der beiden Ausfallzustände ist $p_2 = 1 - p_1$. Ferner wechselt das Gerät nach der ersten Ausfallzeit $t_{r1}$ vom ersten Ausfallzustand in den Betriebszustand zurück. Nach der zweiten Ausfallzeit $t_{r2}$ wechselt es vom zweiten Ausfallzustand zurück in den Betriebszustand.

Wenn physische Geräte ausfallen, können die Ursachen mannigfaltig sein. Manchmal reicht es, das Gerät neu zu starten, um es wieder in Betrieb zu nehmen. In anderen Fällen kann eine umfangreichere Reparatur nötig sein, die das Gerät für längere Zeit ausfallen lässt. Eventuell muss das Gerät sogar durch ein neues ersetzt werden.

Das Durchführen einer Simulation mit zwei Ausfallzuständen bewirkt in vorteilhafter Weise, dass das Simulationsergebnis näher an der Realität ist. Die beiden Ausfallzustände können unterschiedliche Gründe für den Ausfall widerspiegeln. Insbesondere kann eine Ausfallzeit $t_{r1}$ deutlich kürzer sein, als die zweite Ausfallzeit.

Die Simulation berücksichtigt, dass das Gerät nach einer gewissen Zeit vom Betriebszustand in einen der beiden Ausfallzustände wechselt. Das heißt, die Wahrscheinlichkeiten $p_1$ und $p_2$ müssen zusammengenommen 1 ergeben, sofern die Simulation 2 Ausfallzustände berücksichtigt.

Aus den Ausfallzuständen wechselt das Gerät nach Ablauf der Ausfallzeiten $t_{r1}$ bzw. $t_{r2}$ automatisch wieder in den Betriebszustand. Dadurch wird simuliert, dass das Gerät neu gestartet, repariert oder anderweitig wieder betriebsbereit gemacht wird. Die Laufzeitsimulation kann daher insbesondere einen Markov-Prozess simulieren.

In einer Ausführungsform ist jeder Ausfallwahrscheinlichkeit eines jeden virtuellen Geräts eine definierte Ausfallzeit zugeordnet. Die Ausfallzeit für jedes virtuelle Gerät wird anhand der Zuordnung der jeweiligen Ausfallwahrscheinlichkeit zu der definierten Ausfallzeit ermittelt.

Die Ausfallzeit eines virtuellen Geräts kann insbesondere mit einer Server-Ausfallzeit zusammenhängen.

In einer Ausführungsform wird in Schritt a) eine Wiederholungszahl R erfasst. Die Laufzeitsimulation wird für jedes physische Gerät in Schritt c) R mal durchgeführt. Die Ausfallzeit, die in Schritt e) zum Ermitteln der Gesamtausfallzeit herangezogen wird, wird aus den Ausfallzeiten der einzelnen Simulationsdurchläufe gemittelt.

In vorteilhafter Weise senkt die Wiederholung der Laufzeitsimulationen und das anschließende Mitteln der Ergebnisse die Varianz der so ermittelten Ausfallzeiten. Mit anderen Worten, das Ergebnis wird genauer.

In einer Ausführungsform wird in Schritt a) ferner eine Laufzeitlänge Y erfasst. Die Laufzeitsimulation wird für die Laufzeitlänge durchgeführt.

In vorteilhafter Weise wird durch das Erfassen der Laufzeitlänge Y die Laufzeitlänge zum Eingangsparameter für das Verfahren. Das bedeutet, dass die Laufzeitlänge in Abhängigkeit vom Prozess, für den eine Gerätezusammenstellung angepasst werden soll, gewählt werden kann.

Manche Geräte, insbesondere physische Geräte, haben eine gewisse Lebenserwartung. Virtuelle Geräte müssen nach einer gewissen Zeit neu installiert werden, wenn beispielsweise die Serverhardware ausgewechselt oder der Support für eine Version eingestellt wird. Je nach Auswahl der zur Verfügung stehenden Geräte können unterschiedliche Laufzeiten ausgewertet und bei der Anpassung der Gerätezusammenstellung berücksichtigt werden.

In einer Ausführungsform umfasst das Verfahren, dass eine Fertigungslinie, die die Gerätezusammenstellung umfasst, zum Erzeugen von Werkstücken und/oder Produkten tatsächlich bereitgestellt wird.

Die vorgebbaren Erzeugnisse können beispielsweise, ohne darauf beschränkt zu sein, Maschinen- oder Fahrzeugteile, Maschinen, Fahrzeuge oder andere technische Geräte umfassen.

In vorteilhafter Weise bewirkt das vorgeschlagene Konfigurieren der Gerätezusammenstellung einer Fertigungslinie, dass sich die Fertigungslinie und somit auch ganze Produktionsanlagen automatisiert erstellen lassen.

In einer weiteren Ausführungsform umfasst das Verfahren zusätzlich den Schritt des Erzeugens zumindest eines vorgebbaren Erzeugnisses unter Verwendung der Gerätezusammenstellung.

Das Erzeugen von vorgebbaren Erzeugnissen bewirkt in vorteilhafter Weise, dass die Fertigungslinie durch das Verfahren bis an den Punkt konfiguriert werden kann, an dem sie tatsächlich Produkte und Werkstücke fertigt.

In einem weiteren Aspekt betrifft die Erfindung ein Computerprogramm mit Programmcode, um ein Verfahren zur Anpassung einer Gerätezusammenstellung aus physischen und virtuellen Geräten bezüglich der Ausfallzeit wie voranstehend beschrieben auszuführen. Das Computerprogramm wird auf einem Computer ausgeführt.

In einem weiteren Aspekt betrifft die Erfindung einen computerlesbaren Datenträger mit Programmcode eines Computerprogramms für die Ausführung eines Verfahrens zur Anpassung einer Gerätezusammenstellung aus physischen und virtuellen Geräten bezüglich der Ausfallzeit, wie voranstehend beschrieben, wenn das Computerprogramm auf einem Computer ausgeführt wird.

In einem weiteren Aspekt betrifft die Erfindung ein System zur Anpassung einer Gerätezusammenstellung aus physischen und virtuellen Geräten bezüglich der Ausfallzeit, wobei das System umfasst:

- Mittel zum Erfassen einer Funktionsliste mit x Funktionen sowie eines Parametersatzes für die physischen und virtuellen Geräte, mit denen die x Funktionen ausführbar sind,
  wobei der Parametersatz für jedes virtuelle Gerät eine virtuelle Ausfallwahrscheinlichkeit umfasst;
- Mittel zum Bilden von n Konfigurationen aus x Geräten,
  wobei mit den Geräten einer jeden Konfiguration alle x Funktionen der Funktionsliste ausführbar sind;
- Mittel zum Durchführen einer Laufzeitsimulation und Ermitteln einer Ausfallzeit für jedes der physischen Geräte des Parametersatzes;
- Mittel zum Ermitteln einer Ausfallzeit für jedes der virtuellen Geräte des Parametersatzes unter Verwendung der dem jeweiligen virtuellen Gerät zugeordneten virtuellen Ausfallwahrscheinlichkeit;
- Mittel zum Ermitteln einer Gesamtausfallzeit für jede der n Konfigurationen unter Verwendung der Ausfallzeiten für jedes der physischen und virtuellen Geräte der jeweiligen Konfiguration; und
- Mittel zum Anpassen der Gerätezusammenstellung entsprechend der Konfiguration mit der geringsten Gesamtausfallzeit.

Insgesamt wird somit ein computerimplementiertes Verfahren, ein Computerprogrammcode, ein computerlesbarer Datenträger und ein System zur Anpassung einer Gerätezusammenstellung aus physischen und virtuellen Geräten bezüglich der Ausfallzeit angegeben.

Die beschriebenen Ausgestaltungen und Weiterbildungen lassen sich beliebig miteinander kombinieren.

Weitere mögliche Ausgestaltungen, Weiterbildungen und Implementierungen der Erfindung umfassen auch nicht explizit genannte Kombinationen von zuvor oder im Folgenden bezüglich der Ausführungsbeispiele beschriebenen Merkmalen der Erfindung.

Kurze Beschreibung der Zeichnungen

Die beiliegenden Zeichnungen sollen ein weiteres Verständnis der Ausführungsformen der Erfindung vermitteln. Sie veranschaulichen Ausführungsformen und dienen im Zusammenhang mit der Beschreibung der Erklärung von Prinzipien und Konzepten der Erfindung.

Andere Ausführungsformen und viele der genannten Vorteile ergeben sich im Hinblick auf die Zeichnungen. Die dargestellten Elemente der Zeichnungen sind nicht notwendigerweise maßstabsgetreu zueinander gezeigt.

Es zeigen:

Fig. 1          eine schematische Darstellung des Verfahrens gemäß einer Ausführungsform;

Fig. 2          eine schematische Darstellung des Markov-Prozesses gemäß einer Ausführungsform;

Fig. 3          schematisch das Ermitteln der Gesamtausfallzeit gemäß einer Ausführungsform; und

Fig. 4a und 4b  beispielhaft und schematisch zwei Konfigurationen aus physischen und virtuellen Geräten gemäß einer Ausführungsform.

In den Figuren der Zeichnungen bezeichnen

gleiche Bezugzeichen gleiche oder funktionsgleiche Elemente, Bauteile oder Komponenten, soweit nichts Gegenteiliges angegeben ist.

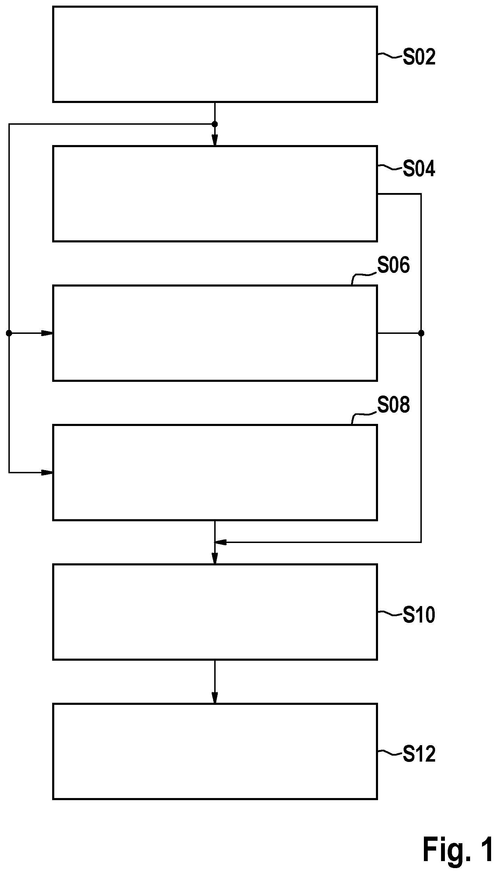

Fig. 1 zeigt eine schematische Darstellung des Verfahrens zum Anpassen der Gerätezusammenstellung gemäß einer Ausführungsform. Das Verfahren umfasst sechs Schritte, die ausgeführt werden.

In einem ersten Schritt S02 werden alle notwendigen Daten erfasst, die für das Anpassen der Gerätezusammenstellung benötigt werden. Darunter fallen beispielsweise eine Funktionsliste mit x Funktionen sowie ein Parametersatz, der die Parameter der Geräte umfasst, die in dem auszuführenden Prozess verwendet werden können.

Die Schritte S04, S06 und S08 können nacheinander in beliebiger Reihenfolge oder parallel zueinander ausgeführt werden. Dies ist in Figur 1 durch die Pfeile dargestellt, die von Schritt S02 zu den Schritten S04, S06 und S08 zeigen.

In Schritt S04 werden n Konfigurationen gebildet, wobei n eine natürliche Zahl größer oder gleich zwei ist. Das Bilden der Konfigurationen erfolgt unter Verwendung der Funktionsliste. Jede Konfiguration muss jede der x Funktionen der Funktionsliste abbilden, da die Gerätezusammenstellung einen bestimmten Prozess ausführen soll, für den diese Funktionen benötigt werden. Jede Konfiguration ist einzigartig und umfasst physische und/oder virtuelle Geräte.

In Schritt S06 wird eine Laufzeitsimulation für jedes der zur Verfügung stehenden physischen Geräte durchgeführt. Das Ergebnis der Laufzeitsimulationen sind gemäß einer Ausführungsform über mehrere Durchläufe gemittelte Ausfallzeiten. Die Ausfallzeiten geben die Dauer an, die ein physisches Gerät voraussichtlich nicht betriebsbereit sein wird. In einer Ausführungsform können physische Geräte einen von zwei Ausfallzuständen einnehmen, die jeweils unterschiedlich lange Ausfallzeiten zur Folge haben.

In Schritt S08 werden die Ausfallzeiten der virtuellen Geräte ermittelt. Für die virtuellen Geräte können beispielsweise Ausfallwahrscheinlichkeiten im Parametersatz angegeben sein, der in Schritt S02 erfasst wurde. Da es relativ einfach ist, ein virtuelles System zu spiegeln und ein redundantes Ersatzsystem bereitzustellen, kann eine hohe Verfügbarkeit von 99 %, insbesondere von 99,9 % oder gar von 99,9 % angenommen werden. Dadurch ergeben sich Ausfallzeiten für eine geplante Laufzeit, die sich ermitteln lässt mit

$$t_i = p_v * T,$$

wobei $p_v$ die Ausfallwahrscheinlichkeit für einen Ausfall des virtuellen Geräts und T die Laufzeit sind.

Sind die Ausfallzeiten für die physischen und die virtuellen Geräte ermittelt, können die Gesamtausfallzeiten für jede der in Schritt S04 gebildeten n Konfigurationen bestimmt werden. Dazu können beispielsweise die Ausfallzeiten aller physischen und virtuellen Geräte aufaddiert werden. Aus den gebildeten Konfigurationen wird dann, beispielsweise durch Vergleich, diejenige bestimmt, die die geringste Gesamtausfallzeit aufweist. Die geringste Gesamtausfallzeit ist im Umkehrschluss gleichbedeutend mit der höchsten Betriebsdauer und damit mit der höchsten Effizienz. Steht die Konfiguration mit der geringsten Gesamtausfallzeit fest, kann die Gerätezusammenstellung entsprechend dieser Konfiguration angepasst werden.

Das Anpassen der Gerätekonfiguration in Schritt S012 kann insbesondere die Installation von virtuellen Geräten in der Edge Cloud umfassen. In einer Ausführungsform erfolgt die Installation aller virtuellen Geräte der Konfiguration mit der geringsten Gesamtausfallzeit vollautomatisch im Anschluss an die Auswahl der Geräte für die Gerätezusammenstellung. Vorausgesetzt, dass der auszuführende Prozess zuvor allein von physischen Geräten ausgeführt wurde, müssen in diesem Fall lediglich die nicht länger benötigten Geräte manuell aus dem Prozess entfernt werden.

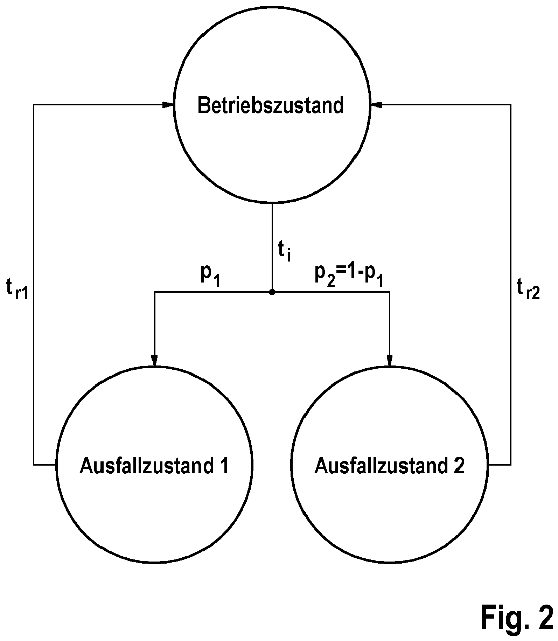

Figur 2 zeigt einen Markov-Prozess gemäß einer Ausführungsform für ein physisches Gerät, das in einen von zwei Ausfallzuständen übergehen kann.

Grundsätzlich befindet sich das Gerät in einem Betriebszustand. Nach einer Zeit $t_i$ geht das Gerät in einen der Ausfallzustände über. Die Zeit $t_i$ kann beispielsweise im Rahmen einer Monte-Carlo-Simulation mit Zufallszahlen ermittelt werden.

Ob das Gerät in Ausfallzustand 1 oder in Ausfallzustand 2 übergeht, hängt von der Ausfallwahrscheinlichkeit $p_1$ ab. Die Ausfallwahrscheinlichkeit $p_2$ ist von $p_1$ abhängig, da das Gerät in dem abgebildeten Prozess mit einer Gesamtwahrscheinlichkeit von 100 % in einen der beiden Ausfallzustände übergeht. Aus diesem Grund ist gemäß dieser Ausführungsform lediglich die Erfassung der Ausfallwahrscheinlichkeit $p_1$ notwendig. Werden mehr Ausfallzustände als 2 betrachtet oder läuft der Simulationsprozess so ab, dass der Übergang in einen der Ausfallzustände individuell bestimmt wird, müssen mehr Ausfallwahrscheinlichkeiten erfasst werden.

Ausfallzustand 1 und Ausfallzustand 2 haben unterschiedliche Ausfallzeiten $t_{r1}$ und $t_{r2}$ zur Folge. Dadurch wird simuliert, dass die Ursachen für den Ausfall von physischen Geräten unterschiedlich starke Auswirkungen auf die Prozesseffizienz haben können. Muss ein Gerät beispielsweise lediglich neu gestartet werden, um in den Betriebszustand zurückzukehren, ist die entsprechende Ausfallzeit gering anzusetzen. Muss das Gerät aufwendig repariert oder gar ersetzt werden, wird eine hohe Ausfallzeit angenommen.

Grundsätzlich kann das hier vorgestellte Verfahren auch für Laufzeitsimulationen mit mehr als zwei Ausfallzuständen durchgeführt werden. Denn auch in diesem Fall würden die Ausfallzeiten simuliert werden, sodass sich am übrigen Verfahren nichts ändern würde.

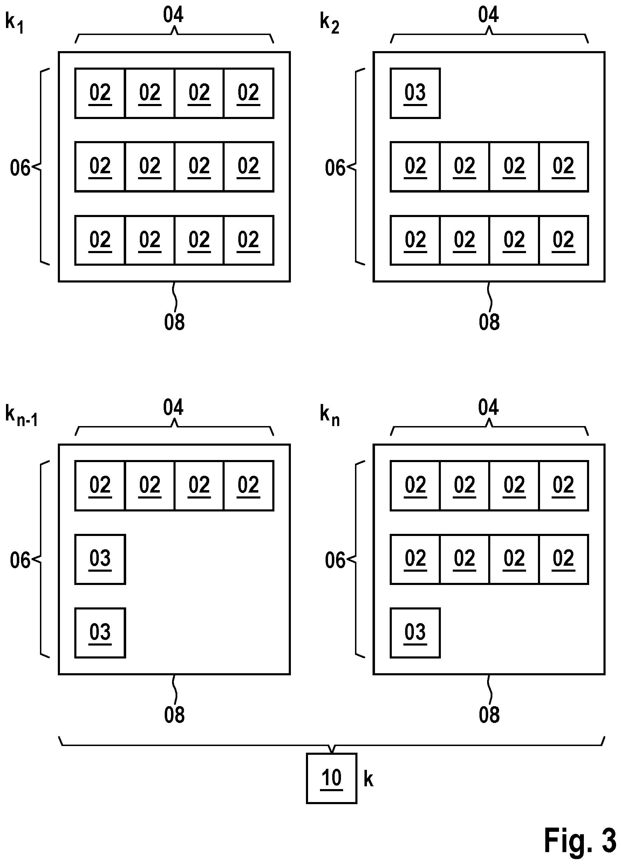

In Figur 3 ist die Ermittlung einer Gesamtausfallzeit 6 einer Konfiguration 8 skizziert. Dargestellt sind

die Konfigurationen $k_1$, $k_2$, $k_{n-1}$ und $k_n$. Jede Konfiguration 8 umfasst mehrere Geräte, für die jeweils eine eigene Ausfallzeit 6 ermittelt wird (vergleiche Schritte S6 und S8 in Figur 1). In Figur 3 sind die Geräte jeweils als eine Zeile in den Konfigurationen 8 dargestellt.

Für die physischen Geräte werden Laufzeitsimulationen durchgeführt. Gemäß der dargestellten Ausführungsform werden die Ausfallzeiten der einzelnen Durchläufe aufaddiert und zu einer durchschnittlichen Ausfallzeit 4 für jedes Gerät gemittelt.

Für virtuelle Geräte wird eine Ausfallzeit 3 aus der Ausfallwahrscheinlichkeit und der Laufzeit berechnet. Die gemittelten Ausfallzeiten 4 der physischen Geräte und die Ausfallzeiten 3 der virtuellen Geräte werden zu Gesamtausfallzeiten 6 für die gesamte Konfiguration 8 aufaddiert. In Figur 3 sind exemplarisch vier von insgesamt $k_r$, Konfigurationen 8 dargestellt.

In der $k_1$ Konfiguration 8 sind alle Geräte physische Geräte, was daran zu erkennen ist, dass in jeder Zeile die Ausfallzeiten 2 aus den Laufzeitsimulationen dargestellt sind. In dem hier gezeigten Beispiel werden für drei Geräte (drei Zeilen) vier Durchläufe der Laufzeitsimulationen durchgeführt. In weiteren Ausführungsformen können beispielsweise 10, 100 oder 1.000 Durchläufe simuliert werden.

In der $k_2$ Konfiguration 8 ist das erste der drei Geräte ein virtuelles Gerät, dessen Ausfallzeit 3 aus der Ausfallwahrscheinlichkeit und der angesetzten Laufzeit berechnet wird. Die Geräte der mittleren und unteren Zeile sind physische Geräte. Sofern es sich um dieselben Geräte wie in der $k_1$ Konfiguration 8 handelt, können die gemittelten Ausfallzeiten 4 für diese Geräte übernommen werden.

In der $k_{n-1}$ Konfiguration 8 sind die Geräte der mittleren und unteren Zeile virtuelle Geräte, deren Ausfallzeit 3 ebenfalls berechnet wird. In der $k_n$ Konfiguration 8 ist nur das untere Gerät ein virtuelles Gerät.

Sind die Gesamtausfallzeiten 6 für jede Konfiguration 8 ermittelt, wird die k Konfiguration 8 mit der geringsten Ausfallzeit 10 bestimmt und infolgedessen die Gerätezusammenstellung an diese Konfiguration angepasst.

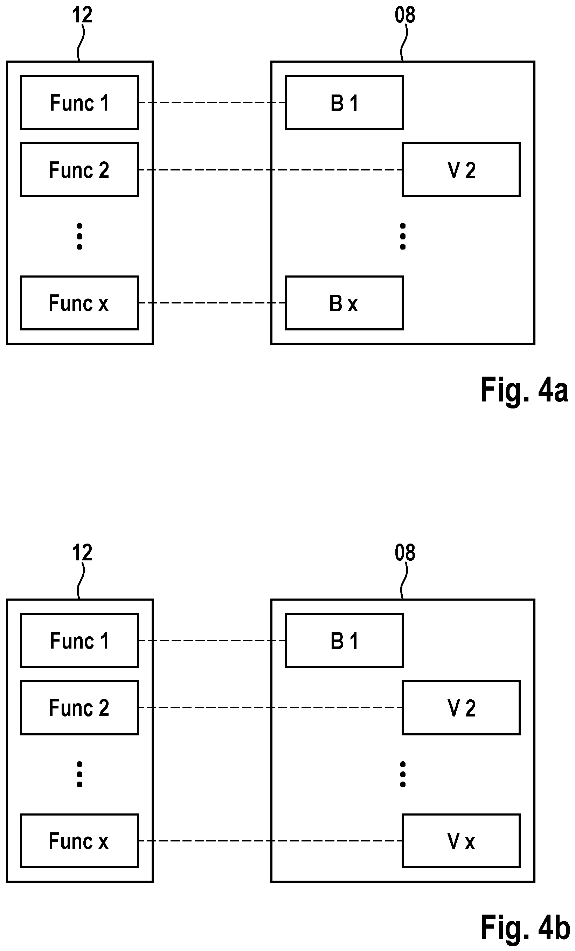

In den Figuren 4a und 4b sind schematisch die Zuordnungen von Geräten aus unterschiedlichen Konfigurationen 8 zu Funktionen einer Funktionsliste 12 dargestellt.

Jede Funktionsliste 12 umfasst x Funktionen, die jeweils als Func 1, Func 2, ..., Func x dargestellt sind. Die Anzahl x der Funktionen hängt von dem Prozess ab, den die Geräte der Gerätezusammenstellung letztlich ausführen sollen. Die Geräte in den Konfigurationen 8 sind dargestellt als physische Geräte (B1 und Bx - links ausgerichtet) und virtuelle Geräte (V2 und Vx - rechts ausgerichtet). Abgesehen von der optischen Hervorhebung in den Figuren hat die Ausrichtung der Geräte keine Bedeutung.

In jeder Konfiguration 8 gibt es ein Gerät, das eine Funktion der Funktionsliste 12 ausführen soll. In einer Ausführungsform kann der Prozess eine oder mehrere Funktionen mehrmals benötigen. Dennoch wird die Funktion in der Funktionsliste 12 nur einmal aufgeführt, da das entsprechende Gerät zweimal gekauft oder installiert werden kann. In einer alternativen Ausführungsform können zwei Funktionen der Funktionsliste 12 identisch sein, sodass auch die den Funktionen zugeordneten Geräte identisch sein können. In dieser Ausführungsform wird berücksichtigt, dass die Ausfallzeiten eines Geräts, das zweimal oder öfter benötigt wird, auch mehrmals bei der Ermittlung der Gesamtausfallzeit einer Konfiguration 8 berücksichtigt wird.

**Patentansprüche**

1. Computerimplementiertes Verfahren zur Anpassung einer Gerätezusammenstellung aus physischen und virtuellen Geräten bezüglich der Ausfallzeit, wobei das Verfahren umfasst:

   a. Erfassen einer Funktionsliste (12) mit x Funktionen sowie eines Parametersatzes für die physischen und virtuellen Geräte, mit denen die x Funktionen ausführbar sind,
   wobei der Parametersatz für jedes virtuelle Gerät eine virtuelle Ausfallwahrscheinlichkeit umfasst;
   b. Bilden von n Konfigurationen aus x Geräten, wobei mit den Geräten einer jeden Konfiguration (8) alle x Funktionen der Funktionsliste (12) ausführbar sind;
   c. Durchführen einer Laufzeitsimulation und Ermitteln einer Ausfallzeit (2, (4) für jedes der physischen Geräte des Parametersatzes;
   d. Ermitteln einer Ausfallzeit (3) für jedes der virtuellen Geräte des Parametersatzes unter Verwendung der dem jeweiligen virtuellen Gerät zugeordneten virtuellen Ausfallwahrscheinlichkeit;
   e. Ermitteln einer Gesamtausfallzeit (6) für jede der n Konfigurationen (8) unter Verwendung der Ausfallzeiten (2, 3, 4) für jedes der physischen und virtuellen Geräte der jeweiligen Konfiguration (8); und
   f. Anpassen der Gerätezusammenstellung entsprechend der Konfiguration (8) mit der geringsten Gesamtausfallzeit (10).

2. Computerimplementiertes Verfahren nach Anspruch 1, wobei die Laufzeitsimulation folgende Schritte umfasst:

   - Prüfen, ob das Gerät in einem Betriebszustand ist,
   - Ermitteln eines Zufallswerts r, der bestimmt, ob das Gerät von dem Betriebszustand in einen Ausfallzustand wechselt,

- Erhöhen der Ausfallzeit, wenn das Gerät in einen Ausfallzustand übergegangen ist,
- Versetzen des Geräts in den Betriebszustand nach einer bestimmten Ausfallzeit, wenn das Gerät nicht im Betriebszustand ist.
wobei die Schritte für die gesamte Laufzeit wiederholt werden.

3. Computerimplementiertes Verfahren nach einem der vorangegangenen Ansprüche, wobei das Ermitteln der Gesamtausfallzeit (10) umfasst:

   a. Durchführen von n-1 Vergleichen von jeweils zwei Konfigurationen (8), wobei eine der beiden zu vergleichenden Konfigurationen (8) eine erste Konfiguration mit ausschließlich physischen Geräten ist und die andere der zu vergleichenden Konfigurationen eine der anderen n-1 Konfigurationen (8) ist;
   b. Streichen von Geräten aus den zu vergleichenden Konfigurationen (8) für die Funktionen, für die das Gerät der anderen der n-1 Konfigurationen ein physisches Gerät ist; und
   c. Ermitteln von relativen Ausfallzeiten für jeden Vergleich durch Aufsummieren der Ausfallzeiten (2, 3, 4) aller Geräte einer Konfiguration (8), die nicht gestrichen wurden und bilden der Differenz zwischen der ersten Konfiguration und der anderen Konfiguration des jeweiligen Vergleichs, wobei die relative Ausfallzeit die Differenz zwischen den Gesamtausfallzeiten (6) der verglichenen Konfigurationen (8) ist,

   wobei die Konfiguration (8) mit der geringsten Gesamtausfallzeit (10) aus den Konfigurationen (8) mit einer positiven relativen Ausfallzeit ermittelt wird oder die erste Konfiguration ist, falls es keine positiven relativen Ausfallzeiten gibt.

4. Computerimplementiertes Verfahren nach einem der vorhergehenden Ansprüche, wobei der Parametersatz für jedes physische Gerät einen Wert für eine erste Ausfallwahrscheinlichkeit $p_1$, eine erste Ausfallzeit $t_{r1}$ und eine zweite Ausfallzeit $t_{r2}$ umfasst und

   wobei die Laufzeitsimulation einen oder mehrere zufällige Zeitpunkte $t_i$ eines Zustandswechsels von einem Betriebszustand in einen von zwei Ausfallzuständen simuliert,
   wobei die Wahrscheinlichkeit für einen Übergang in einen ersten Ausfallzustand $p_1$ und die Wahrscheinlichkeit für einen Übergang in einen zweiten Ausfallzustand $p_2 = 1 - p_1$ ist,
   wobei der erste Ausfallzustand die erste Ausfallzeit $t_{r1}$ zur Folge hat und ein zweiter Ausfallzustand die zweite Ausfallzeit $t_{r2}$ zur Folge hat,
   wobei das Ermitteln der Gesamtlaufzeit (6) für jede Konfiguration (8) das Aufsummieren aller Ausfallzeiten (2, 3, 4) für die Laufzeitsimulation umfasst.

5. Computerimplementiertes Verfahren nach einem der vorhergehenden Ansprüche, wobei jede Ausfallwahrscheinlichkeit eines virtuellen Geräts einer definierten Ausfallzeit zugeordnet ist und
   wobei die Ausfallzeit (3) für jedes virtuelle Gerät anhand der Zuordnung der jeweiligen Ausfallwahrscheinlichkeit zu der definierten Ausfallzeit ermittelt wird.

6. Computerimplementiertes Verfahren nach einem der vorhergehenden Ansprüche, wobei in Schritt a) ferner eine Wiederholungszahl R erfasst und die Laufzeitsimulation in Schritt c) für jedes physische Gerät R mal durchgeführt wird, wobei die Ausfallzeit (4) des jeweiligen Geräts über alle R Durchläufe gemittelt wird.

7. Computerimplementiertes Verfahren nach einem der vorhergehenden Ansprüche, wobei in Schritt a) ferner eine Laufzeitlänge Y erfasst wird und die Laufzeitsimulation die Ausfallzeit (2, 4) für die Laufzeitlänge Y simuliert.

8. Verfahren nach einem der vorhergehenden Ansprüche, wobei ferner eine Fertigungslinie umfassend die Gerätezusammenstellung zum Erzeugen von vorgebbaren Erzeugnissen bereitgestellt wird.

9. Verfahren nach Anspruch 8, wobei das Verfahren nach der Bereitstellung der Fertigungslinie ferner den Schritt umfasst:

   - Erzeugen zumindest eines vorgebbaren Erzeugnisses unter Verwendung der Gerätezusammenstellung.

10. Computerprogramm mit Programmcode, um ein Verfahren zur Anpassung einer Gerätezusammenstellung aus physischen und virtuellen Geräten bezüglich der Ausfallzeit nach einem der vorhergehenden Ansprüche auszuführen, wenn das Computerprogramm auf einem Computer ausgeführt wird.

11. Computerlesbarer Datenträger mit Programmcode eines Computerprogramms für die Ausführung eines Verfahrens zur Anpassung einer Gerätezusammenstellung aus physischen und virtuellen Geräten bezüglich der Ausfallzeit gemäß einem der Ansprüche 1 bis 9, wenn das Computerprogramm auf einem Computer ausgeführt wird.

12. System zur Anpassung einer Gerätezusammenstellung aus physischen und virtuellen Geräten bezüglich der Ausfallzeit, wobei das System umfasst:

- Mittel zum Erfassen einer Funktionsliste (12) mit x Funktionen sowie eines Parametersatzes für die physischen und virtuellen Geräte, mit denen die x Funktionen ausführbar sind, wobei der Parametersatz für jedes virtuelle Gerät eine virtuelle Ausfallwahrscheinlichkeit umfasst;

- Mittel zum Bilden von n Konfigurationen (8) aus x Geräten, wobei mit den Geräten einer jeden Konfiguration (8) alle x Funktionen der Funktionsliste ausführbar sind;

- Mittel zum Durchführen einer Laufzeitsimulation und Ermitteln einer Ausfallzeit (2, 4) für jedes der physischen Geräte des Parametersatzes;

- Mittel zum Ermitteln einer Ausfallzeit (3) für jedes der virtuellen Geräte des Parametersatzes unter Verwendung der dem jeweiligen virtuellen Gerät zugeordneten virtuellen Ausfallwahrscheinlichkeit;

- Mittel zum Ermitteln einer Gesamtausfallzeit (6) für jede der n Konfigurationen (8) unter Verwendung der Ausfallzeiten (2, 3, 4) für jedes der physischen und virtuellen Geräte der jeweiligen Konfiguration (8); und

- Mittel zum Anpassen der Gerätezusammenstellung entsprechend der Konfiguration (8) mit der geringsten Gesamtausfallzeit (10).

Fig. 1

Fig. 2

Fig. 3

12  08

Func 1 ----- B 1

Func 2 ----- V 2

⋮  ⋮

Func x ----- B x

**Fig. 4a**

12  08

Func 1 ----- B 1

Func 2 ----- V 2

⋮  ⋮

Func x ----- V x

**Fig. 4b**

Europäisches Patentamt
European Patent Office
Office européen des brevets

# EUROPÄISCHER RECHERCHENBERICHT

**Nummer der Anmeldung**

EP 24 17 4867

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (IPC) |
|---|---|---|---|
| Y | GABRIEL MATEESCU ET AL: "Hybrid Computing Where HPC meets grid and Cloud Computing", FUTURE GENERATION COMPUTER SYSTEMS, ELSEVIER SCIENCE PUBLISHERS. AMSTERDAM, NL, Bd. 27, Nr. 5, 3. November 2010 (2010-11-03), Seiten 440-453, XP028148360, ISSN: 0167-739X, DOI: 10.1016/J.FUTURE.2010.11.003 [gefunden am 2010-11-26] * Zusammenfassung * * Abbildungen 5-7 * * Abschnitte 3-4 * ----- | 1-12 | INV. G05B19/418 G05B17/02 |
| Y | US 2021/072965 A1 (MASTERS OLIVER PAUL [GB] ET AL) 11. März 2021 (2021-03-11) * Zusammenfassung * * Abbildungen 1, 3 * * Absätze [0027] - [0122] * ----- | 1-12 | |
| Y | US 2019/286471 A1 (CAO BIN [US] ET AL) 19. September 2019 (2019-09-19) * Zusammenfassung * * Abbildung 5 * * Absätze [0048] - [0128] * ----- | 1-12 | RECHERCHIERTE SACHGEBIETE (IPC) G05B G06F |
| A | US 2022/179374 A1 (KABERG JOHARD LEONARD [RU]) 9. Juni 2022 (2022-06-09) * Zusammenfassung * * Abbildung 1 * * Absätze [0086] - [0228] * ----- | 1-12 | |

Der vorliegende Recherchenbericht wurde für alle Patentansprüche erstellt

| Recherchenort | Abschlußdatum der Recherche | Prüfer |
|---|---|---|
| Den Haag | 3. Oktober 2024 | Hageman, Elodie |

KATEGORIE DER GENANNTEN DOKUMENTE

X : von besonderer Bedeutung allein betrachtet
Y : von besonderer Bedeutung in Verbindung mit einer anderen Veröffentlichung derselben Kategorie
A : technologischer Hintergrund
O : nichtschriftliche Offenbarung
P : Zwischenliteratur

T : der Erfindung zugrunde liegende Theorien oder Grundsätze
E : älteres Patentdokument, das jedoch erst am oder nach dem Anmeldedatum veröffentlicht worden ist
D : in der Anmeldung angeführtes Dokument
L : aus anderen Gründen angeführtes Dokument

.................................................................

& : Mitglied der gleichen Patentfamilie, übereinstimmendes Dokument

EPO FORM 1503 03.82 (P04C03)

**ANHANG ZUM EUROPÄISCHEN RECHERCHENBERICHT**
**ÜBER DIE EUROPÄISCHE PATENTANMELDUNG NR.**

EP 24 17 4867

In diesem Anhang sind die Mitglieder der Patentfamilien der im obengenannten europäischen Recherchenbericht angeführten Patentdokumente angegeben.
Die Angaben über die Familienmitglieder entsprechen dem Stand der Datei des Europäischen Patentamts am
Diese Angaben dienen nur zur Unterrichtung und erfolgen ohne Gewähr.

03-10-2024

| Im Recherchenbericht angeführtes Patentdokument | Datum der Veröffentlichung | Mitglied(er) der Patentfamilie | Datum der Veröffentlichung |
|---|---|---|---|
| US 2021072965 A1 | 11-03-2021 | CN 114341810 A | 12-04-2022 |
| | | DE 112020002987 T5 | 07-04-2022 |
| | | GB 2603340 A | 03-08-2022 |
| | | JP 7510233 B2 | 03-07-2024 |
| | | JP 2022546994 A | 10-11-2022 |
| | | US 2021072965 A1 | 11-03-2021 |
| | | WO 2021044296 A1 | 11-03-2021 |
| US 2019286471 A1 | 19-09-2019 | US 2017199752 A1 | 13-07-2017 |
| | | US 2019286470 A1 | 19-09-2019 |
| | | US 2019286471 A1 | 19-09-2019 |
| US 2022179374 A1 | 09-06-2022 | BR 112021020692 A2 | 14-12-2021 |
| | | CA 3135703 A1 | 22-10-2020 |
| | | CN 113748434 A | 03-12-2021 |
| | | EP 3956823 A1 | 23-02-2022 |
| | | JP 7538143 B2 | 21-08-2024 |
| | | JP 2022529463 A | 22-06-2022 |
| | | SE 1950490 A1 | 19-10-2020 |
| | | US 2022179374 A1 | 09-06-2022 |
| | | WO 2020214075 A1 | 22-10-2020 |

EPO FORM P0461

Für nähere Einzelheiten zu diesem Anhang : siehe Amtsblatt des Europäischen Patentamts, Nr.12/82